Europäisches Patentamt

European Patent Office

Office européen des brevets

(11) Publication number: **0 150 693**
A2

# EUROPEAN PATENT APPLICATION

(21) Application number: **84830362.4**

(22) Date of filing: **28.12.84**

(51) Int. Cl.⁴: **A 47 J 31/42**, A 47 J 31/36, A 47 J 31/24

(30) Priority: **02.02.84 IT 2069284 U**

(43) Date of publication of application: **07.08.85 Bulletin 85/32**

(84) Designated Contracting States: **AT BE CH DE FR GB LI NL SE**

(71) Applicant: **C.C.R.O. S.r.l., Via Masotto, 23, I-20133 Milano (IT)**

(72) Inventor: **Cernuschi, Gianluigi C.C.R.O. S.r.1., Via Masotto 23, I-20133 Milano (IT)**

(74) Representative: **Cicogna, Franco, Ufficio Internazionale Brevetti Dott.Prof. Franco Cicogna Via Visconti di Modrone, 14/A, I-20122 Milano (IT)**

(54) Instantaneously heated coffee-machine and coffee-mill including a built-in coffee powder metering device, of matable shapes, effective to be mutually coupled.

(57) There is disclosed an instantaneously heated coffee machine, comprising an outer elongated casing including convex side walls (3) to be coupled with the concave side wall (4) of the outer casing of a coffee mill (1), the coffee machine including a plurality of dispensing assemblies or units (5) each whereof is provided with an individual vibration pump (20) communicating with a tank (22) and supplying water to an independently operating heating chamber (24).

The present invention relates to an instantaneously heated coffee machine, including one or more coffee dispensing assemblies or units, and a coffee-mill with a built-in metering device, having matable shapes to be mutually coupled.

As it is known, there are presently made coffee machines, of the instantaneous heated type, provided with a single dispensing assembly, which are used, in addition to home environments, in offices, communities and the like.

Obviously the mentioned instantaneously heated coffee machines are able of meeting limited needs, thereby, as the coffee demand increases, they are to be replaced by other coffee machines, usually of the steam accumulating type, and provided with a greater number of coffee dispensing assemblies, and consequently of high cost.

With those same machines, moreover, there is usually associated a coffee mill which conventionally forms an independent device, having an inverted frustum of cone structure arranged on a suitable supporting upright.

That coffee mill, as it should be apparent, because of its specifically designed struc-

2

ture, is not effective to neatly combine with the design of the coffee machine and, accordingly, is held as a separate unit from the latter.

Accordingly, the task of the present invention is to provide an istantaneously heated coffee machine, of very reduced cost, and a coffee mill including a coffee powder metering device, which may be neatly fitted to one another, in such a way as to provide a substantially integral structure.

According to one aspect of the present invention, the above task, as well as yet other objects which will become more apparent thereinafter, are achieved by an instantaneously heated coffee machine and coffee mill including a coffee metering device, characterized in that they are made with matable shapes, in such a way to be effective to be coupled to substantially provide an integral or single body.

In particular, the instantaneous heated coffee machine may comprise one or more coffee dispensing assemblies or units.

Further characteristics and advantages of the instantaneously heated coffee machine and coffee mill according to the present invention, will become more apparent thereinafter from the following detailed description and with reference to the accompanying drawings, where:

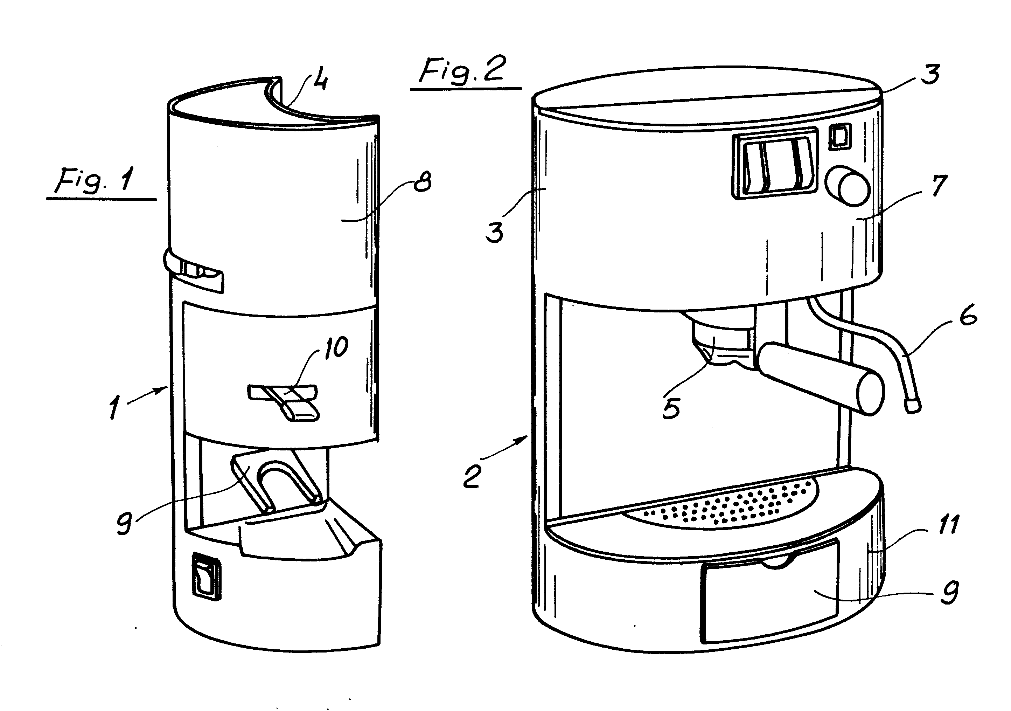

Fig. 1 is a perspective view illustrating the coffee mill including a coffee powder metering device according to the invention;

Fig. 2 illustrates the coffee machine, including a single coffee dispensing assembly or unit, and which may comprise a coffee waste holding small drawer;

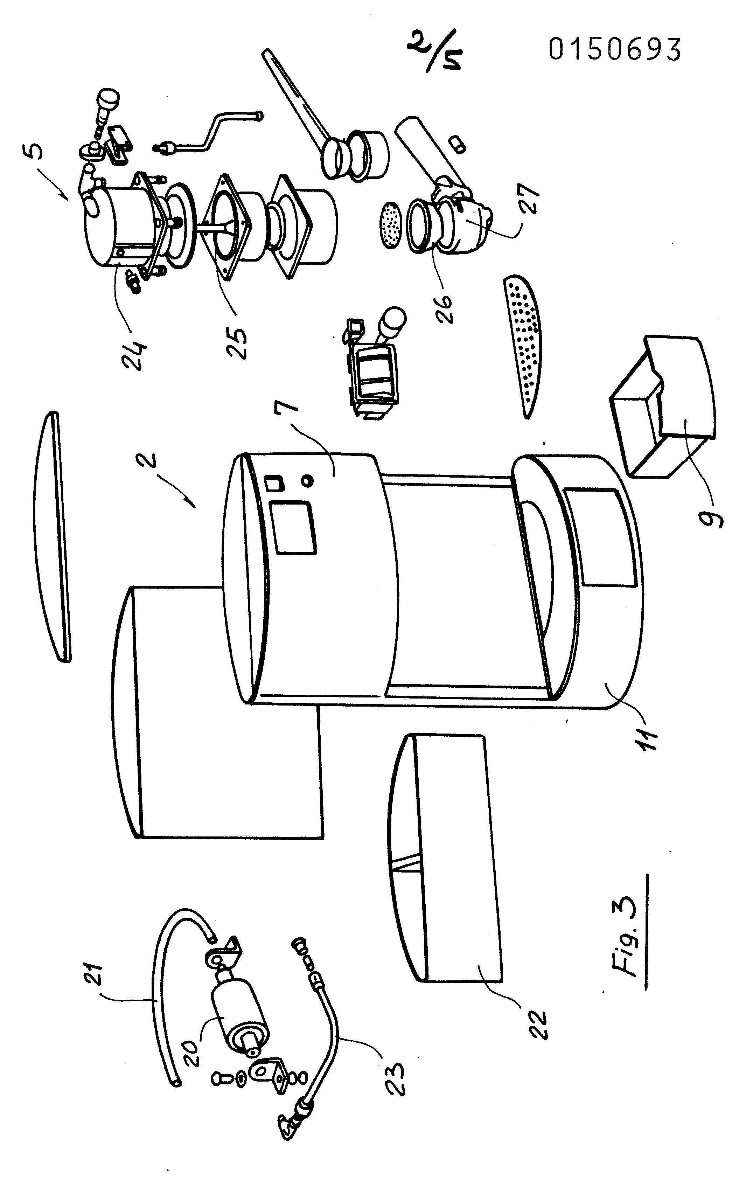

Fig. 3 is an exploded view illustrating the coffee machine according to Fig. 1;

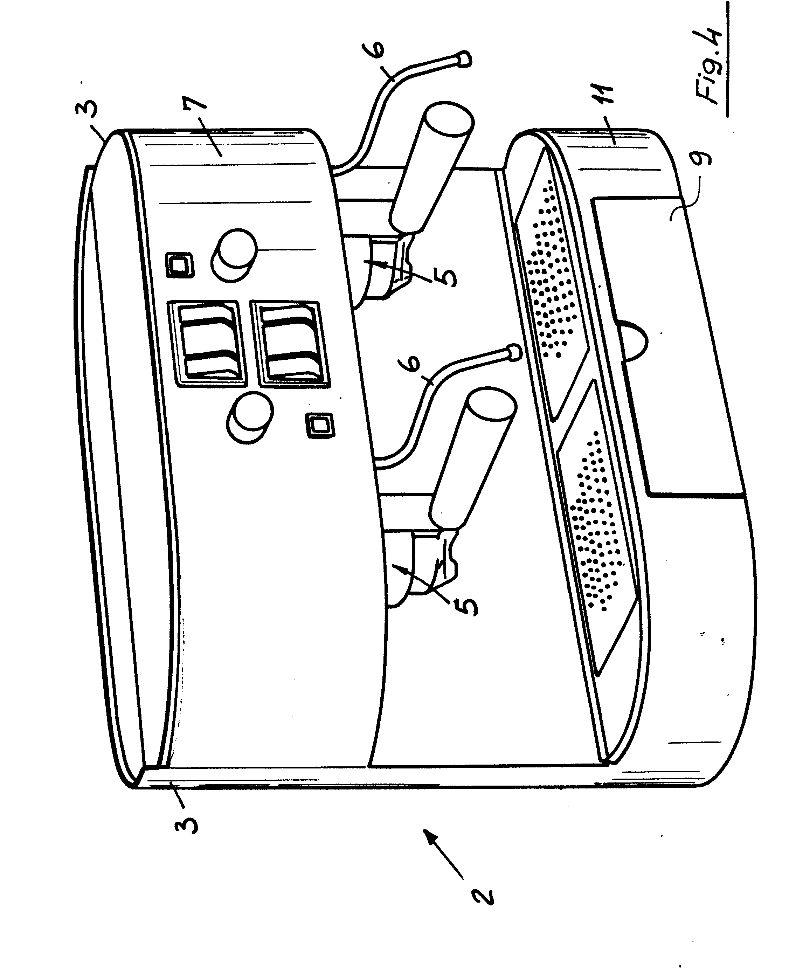

Fig. 4 illustrates a coffee machine comprising two coffee dispensing assemblies or units and a coffe waste holding drawer;

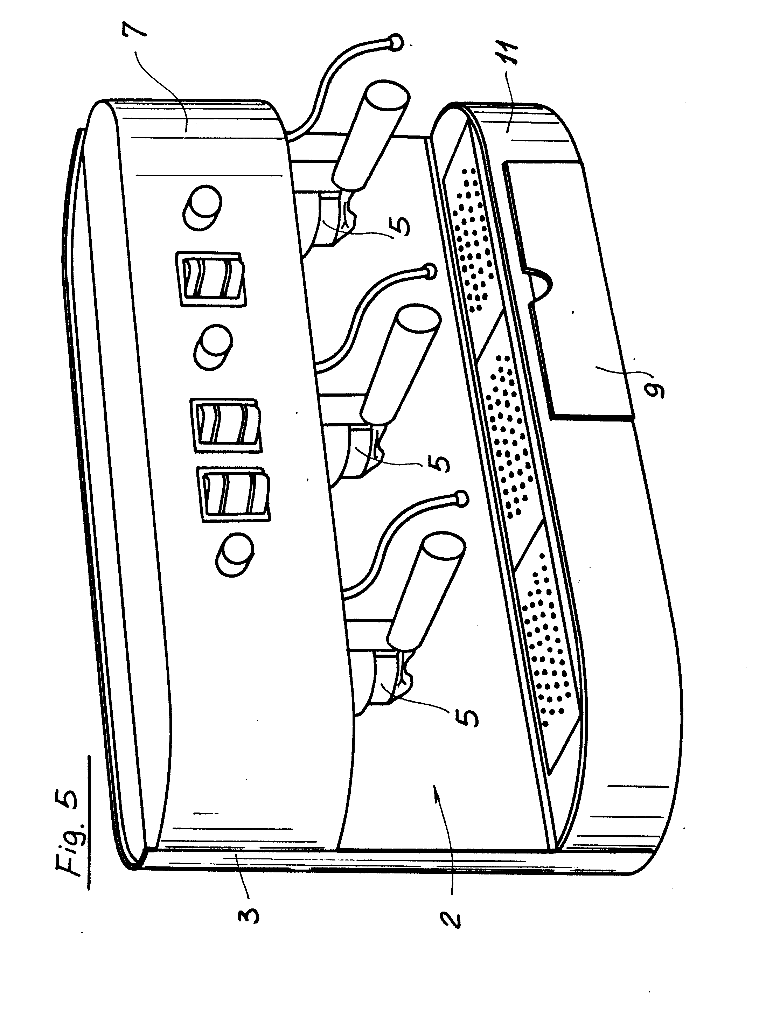

Fig. 5 illustrates a coffee machine comprising three coffee dispensing assemblies or units; and

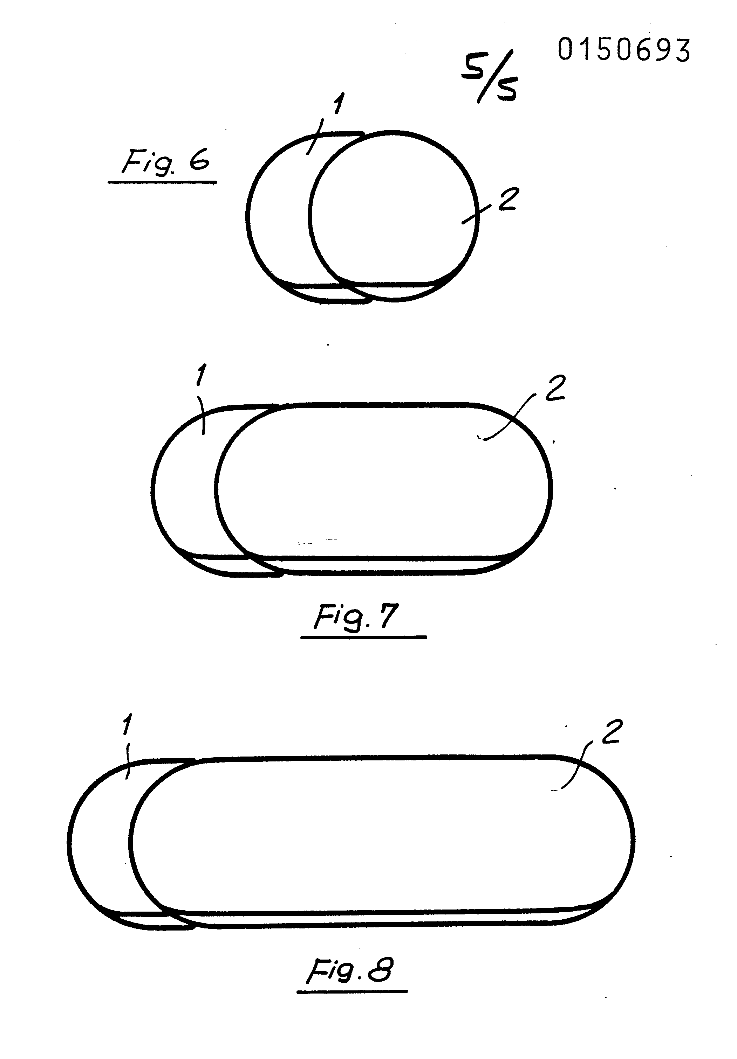

Figs. 6, 7 and 8 schematically illustrate, from the top, some possible practical arrangement of the mentioned coffee machines and coffee mill.

With reference to the several Figures of the accompanying drawings, the coffee mill 1 and the instantaneously heated coffee machine 2, according

0150693

to the invention, are arranged in substantially round or elongated cross-section casings, provided with convex side walls 3, and a concave side wall 4 effective to be neatly mated with one of the mentioned convex walls.

That approach affords the possibility of coupling an instantaneously heated coffee machine to a coffee mill, while providing a compact structure susceptible to be easily modified as the needs change.

More specifically, the instantaneous heated coffee machine may be provided with one or more coffee dispensing assemblies or units 5, including the related steam duct 6, as arranged at the bottom of a cantilever substantially round body 7, provided with suitable driving and control members.

It should be noted that each coffee dispensing assembly of the coffee machine has a specific structure and operates in an independent way from the other coffee dispensing assemblies. In fact, for each coffee dispensing assembly or unit, the coffee machine is provided with a vibration type of pump 20 including a sucking duct 21 communicating with a water tank 22.

5

0150693

The pump 20 is coupled, through a delivery duct 23, to a heating chamber 24, which comprises a metering valve 25 effective to adjust the inlet of the heated water to the coffee powder, contained in the inter-exchangeable cup member 26 housed in the filter holder 27.

The coffee-mill, in turn, has its operating members also enclosed in a cantilever round cross-section body 8, thereunder there is provided a fork shaped member 9 effective to support the filter of the two coffee dispensing assemblies, -during the fill in of the ground coffee powder.

The mentioned coffee mill is also provided with a lever 10 for controlling a coffee powder metering device.

The coffee machine according to the invention is also provided with a coffee powder waste drawer member 9 as arranged at the bottom 11 of the coffee machine according to the invention.

From the above disclosure it should be noted that the invention fully achieves the intended task, and in particular it should be pointed out that the provision of a coffee machine including a number of coffee dispensing assemblies or units,

0150693

each whereof is provided with an individual water tank, an individual water supplying pump and an independent heating assembly, affords the possibility of obtaining a coffee machine with a high output, while providing a comparatively constructionally simple coffee machine.

Moreover, the specific used structure affords the possibility of rationalize the size, thereby affording the possibility of easily adjoining a coffee mill.

The invention as disclosed is susceptible to several modifications and variations, all of which comes within the scope of the invention.

In practicing the invention all of the details may be replaced by other technically equivalent elements.

## CLAIMS

1. An instantaneously heated coffee machine, characterized in that it comprises an outer casing having, at its side end portions, a shape effective to be mated to the side wall of a coffee-mill (1).

2. An instantaneously heated coffee machine, according to Claim 1, characterized in that said outer casing of said coffee machine is of round or elongated cross-section, with convex side walls (3) the outer casing of said coffee mill (1) being provided with a concave side wall (4) effective to be fitted to one of said convex walls (3).

3. An instantaneously heated coffee machine according to the preceding Claims, characterized in that it is provided with at least a dispensing assembly or unit (5) with a related steam duct (6) arranged at the bottom of a cantilever round cross-section body (7) provided with driving and control members.

4. An instantaneously heated coffee machine, according to one or more of the preceding Claims, comprising a plurality of said dispensing assemblies or units (5), characterized in that each

0150693

said dispensing assembly (5) is provided with a vibration pump (20) communicating with a tank (22) contained in said outer casing and coupled to a heating chamber.

5. A coffee mill, according to one or more of the preceding Claims, characterized in that its operating members are enclosed in a round cross-section cantilever body (8) thereunder there is provided a fork member (9) effective to support the filter of said dispensing assemblies during the filling  therein  of  the ground coffee powder.

6. A coffee mill according to one or more of the preceding Claims, characterized in that it comprises a coffee powder metering device (10).

7. A coffee machine, according to one or more of the precesing claims, characterized in that it comprises a coffe waste holding drawer member (9).

Fig. 1

Fig. 2

1/5

0150693

Fig. 3

2/5

0150693

Fig.4

Fig. 5

4/5

0150693

5/5    0150693

Fig. 6

Fig. 7

Fig. 8